# FASCICULE DE BREVET EUROPEEN

(11) **EP 2 550 766 B1**
(45) Date de publication et mention de la délivrance du brevet: **07.01.2015**
(21) Numéro de dépôt: 11715718.0
(22) Date de dépôt: 21.03.2011
(51) Int. Cl.: H04L 9/08, H04N 21/258, H04N 21/418

(54) **PROCEDE POUR IDENTIFIER UN DISPOSITIF MIS EN OEUVRE PAR UN TERMINAL PIRATE ET DISPOSITIF ASSOCIE**
VERFAHREN ZUR IDENTIFIZIERUNG EINES GERÄTES, DAS DURCH EIN ILLEGALES ENDGERÄT GENUTZT WIRD, UND ENTSPRECHENDES GERÄT.
METHOD FOR IDENTIFICATION OF A DEVICE OPERATED BY AN ILLEGAL TERMINAL AND ASSOCIATED DEVICE

(30) Priorité: 23.03.2010 FR 1052108
(43) Date de publication de la demande: 30.01.2013
(73) Titulaire: CRYPTOEXPERTS, 75002 Paris (FR)
(72) Inventeur: DELERABLEE, Cécile, F-75017 Paris (FR); GOUGET, Aline, F-75016 Paris (FR); PAILLIER, Pascal, F-75020 Paris (FR)
(74) Mandataire: Brun, Philippe Alexandre Georges
(86) Numéro de dépôt international: PCT/FR2011/050580
(87) Numéro de publication internationale: WO 2011/117525

(56) Documents cités:
- EP-A1- 1 331 751
- EP-A1- 1 631 085
- WO-A1-2005/048603
- WO-A1-2008/013562
- US-A1- 2005 278 257

## Description

L'invention concerne un procédé pour prévenir la mise en oeuvre d'un dispositif électronique licitement acquis et intègre, au moyen d'un terminal pirate. L'invention permet ainsi de lutter efficacement contre la mise à disposition frauduleuse de contenus multimédias protégés.

L'invention concerne en outre l'adaptation de tels dispositifs ainsi qu'un procédé pour déclencher respectivement la révocation permanente d'un dispositif électronique ou la réhabilitation éventuelle de ce dernier.

Un opérateur de diffusion de contenus numériques opère généralement un système d'accès conditionnel (*Conditional Access System -* CAS en langue anglaise) pour mettre un contenu protégé à la disposition d'un abonné ou d'une pluralité d'abonnés. Un tel système s'appuie généralement sur des dispositifs électroniques sécurisés, tels que des cartes à puce, pour héberger les identités et/ou les droits des abonnés et pour réaliser des opérations de chiffrement, de déchiffrement ou de génération de nombres.

Pour diffuser un contenu multimédia protégé, des mots de contrôle chiffrés *c* et des contenus encodés *C* sont transmis au travers d'un réseau de diffusion, à intervalles réguliers ou, pour le moins, connus et maîtrisés par l'opérateur de diffusion. Un mot de contrôle chiffré est obtenu généralement au moyen d'une fonction de chiffrement *E* telle que *c=E(k), k* étant la valeur dudit mot de contrôle. Un contenu encodé *C* est quant à lui obtenu au moyen d'une fonction de codage *enc* et dudit mot de contrôle *k*, tel que *C* = *enc(k,M), M* étant le contenu multimédia en clair. A titre d'exemple, la fonction d'encodage peut être conforme au standard DVB-CSA (*Digital Video Broadcasting - Common Scrambling Algorithm,* en langue anglaise). Pour pouvoir visualiser ou écouter un contenu protégé, toute personne doit souscrire un abonnement. Un abonné perçoit un dispositif dédié, généralement sous la forme d'une carte à puce, qui couplé à un terminal, généralement appelé décodeur ou « set-top box », permet audit abonné de décoder un contenu protégé. Les mots de contrôles chiffrés c sont classiquement déchiffrés par le dispositif d'abonné qui délivre les mots de contrôle *k* au terminal. Ce dernier est en charge de réaliser le décodage d'un contenu encodé C et permet, au moyen d'une interface Homme-Machine adaptée - par exemple un téléviseur de salon, d'accéder au contenu clair *M*.

Il est usuel que des entités « pirates » tentent de développer un commerce illicite visant à émettre, sur un réseau pirate, des contenus clairs *M* ou des mots de contrôle déchiffrés *k* permettant de décoder un contenu protégé *C* à l'aide d'un terminal adapté à cet effet. Les premières menaces et attaques ont poussé les pirates à tenter de « casser » la sécurité des dispositifs électroniques d'abonné. Par la connaissance du matériel cryptographique, des algorithmes ou de secrets, un pirate peut alors « cloner » ou émuler un tel dispositif et mettre certaines de ces « reproductions » à la disposition d'abonnés indélicats.

La robustesse croissante et quasi inviolable de tels dispositifs ont conduit les pirates à acquérir licitement des dispositifs d'abonné (tels que des cartes à puce) et à concevoir des terminaux pirates, aptes à coopérer avec lesdits dispositifs et à émettre les mots de contrôles déchiffrés *k* voire des contenus décodés *M*, en temps réel, sur un réseau ou canal pirate comme par exemple le réseau Internet. Cette menace est connue sous l'appellation anglaise de « *card sharing »* ou « *control word sharing ».*

Pour contrer les pirates, les opérateurs parviennent généralement à connaître l'existence d'un tel réseau pirate. En souscrivant un abonnement auprès d'un pirate, un opérateur peut même disposer d'un dispositif « cloné » ou émulé et l'étudier. Toutefois, dans le scénario *« control word sharing* », il n'existe pas de procédés connus permettant d'identifier à distance un dispositif qui, bien que régulièrement acquis et intègre, est frauduleusement exploité. Il n'existe pas davantage de procédés pour éventuellement révoquer à distance un tel dispositif, sans nécessiter une modification de l'architecture matérielle et logicielle des réseaux de diffusion et/ou de parcs de terminaux licites et sans procurer une gêne particulièrement pénalisante aux abonnés réguliers lors de leurs accès à des contenus protégés.

L'invention permet de répondre à l'ensemble des inconvénients soulevés par les solutions connues. Parmi les nombreux avantages apportés par l'invention, nous pouvons mentionner que l'invention permet de tracer, à distance, tout dispositif d'abonné ayant permis de produire un mot de contrôle dont la valeur peut être transmise sur un réseau pirate. L'invention permet en outre et en variante de tracer tout dispositif d'abonné ayant produit un mot de contrôle ayant permis de décoder un contenu protégé et dont la teneur en clair est émise sur ledit réseau pirate. L'invention permet en outre de révoquer à distance un tel dispositif, dit « dispositif traître », tout en poursuivant la diffusion d'un contenu au travers du réseau de diffusion. L'invention offre ainsi, à tout opérateur de diffusion de contenus, un outil particulièrement simple et efficace pour lutter contre le piratage.

A cette fin, il est prévu un procédé pour produire un mot de contrôle *k*', ledit procédé étant mis en oeuvre par des moyens de traitement d'un dispositif électronique coopérant avec un terminal, ledit dispositif comportant des moyens pour recevoir un mot de contrôle chiffré *c* depuis le terminal et des moyens pour délivrer ledit mot de contrôle *k*' produit audit terminal. Un tel procédé comporte une étape pour appliquer au mot de contrôle chiffré *c* une fonction de déchiffrement *D* et calculer ainsi un mot déchiffré *k* tel que *k* = *D(c).* Selon l'invention, le mot déchiffré *k* comporte une composante *v* et le procédé comporte en outre une étape pour produire le mot de contrôle *k*' respectivement identique ou distinct de *k* selon le résultat d'une opération de comparaison entre les valeurs de *v* et d'un identificateur *i* dédié au dispositif.

Selon un mode de réalisation avantageux, l'étape pour produire le mot de contrôle *k'* distinct *de k* peut consister à produire un mot *k'* = *kf* dont la valeur *kf* est différente de la valeur de *k.*

En variante, l'étape pour produire le mot de contrôle *k'* distinct de *k* peut consister à mettre en oeuvre une fonction retard de sorte que les moyens pour délivrer délivrent ledit mot de contrôle *k'* = *kd* dont la valeur *kd* est égale à *k,* après un laps de temps déterminé.

Selon un mode de réalisation, l'étape pour produire le mot de contrôle *k*' peut consister à produire un mot identique à *k* si la valeur de la composante *v* est strictement inférieure à la valeur de l'identificateur *i* et distinct de *k* si la valeur de la composante *v* est supérieure ou égale à la valeur de l'identificateur *i*. En variante, l'invention peut prévoir que :
- l'identificateur *i* est un vecteur de z entiers de valeurs *i* = (*i*₁,...,*i_{z}*) comprises dans un ensemble [1,*m*], *m* et *z* étant des entiers supérieurs à 1 ;
- la composante *v* est un vecteur de z entiers de valeurs *v* = (*v*₁,...,v*_{z}*) comprises dans un ensemble [0,*m*].

Dans ce cas, l'étape pour produire le mot de contrôle *k*' peut consister à produire un mot :
- identique à *k* si la valeur de chaque entier *vₗ* est respectivement strictement inférieure à la valeur de chaque entier *iₗ* pour tout *l* compris entre 1 et *z*,
- distinct de *k*, dans le cas contraire.

Pour pouvoir mettre en oeuvre un tel procédé, il est également prévu un dispositif électronique coopérant avec un terminal, ledit dispositif comportant :
- des moyens pour recevoir un mot de contrôle chiffré *c* depuis le terminal ;
- des moyens de traitement pour produire un mot de contrôle *k*' à partir dudit mot de contrôle chiffré *c* ;
- des moyens pour délivrer, audit terminal, ledit mot de contrôle produit en réponse à la réception du mot de contrôle chiffré *c*.

Selon l'invention, un tel dispositif comporte des moyens pour mémoriser un identificateur *i* et les moyens de traitement sont agencés pour mettre en oeuvre un procédé conforme à l'invention pour produire le mot de contrôle *k*'.

L'invention prévoit qu'un tel dispositif puisse comporter des moyens pour mettre en oeuvre une fonction retard coopérant avec les moyens de traitement et que lesdits moyens de traitement puissent être agencés pour mettre en oeuvre un procédé conforme à l'invention de sorte que le mot de contrôle *k*' puisse être délivré par les moyens pour délivrer après un laps de temps déterminé.

Il est également prévu que le dispositif électronique puisse comporter des moyens pour mémoriser une information *Rₚ* indiquant une révocation permanente dudit dispositif voire qu'il puisse comporter des moyens pour mémoriser ou générer un mot d'une valeur *kf* différente de la valeur de *k.*

L'invention prévoit en outre différents modes de réalisation d'un procédé pour identifier un dispositif électronique, tel que décrit précédemment et coopérant avec un terminal pirate apte à émettre au travers d'un réseau pirate un mot de contrôle *k'*. Un tel procédé comporte :
- une étape pour produire un mot de contrôle *k* consistant à déterminer la valeur d'une composante *v* dudit mot de contrôle ;
- une étape pour produire un mot de contrôle chiffré *c* en chiffrant ledit mot de contrôle *k* au moyen d'une fonction de chiffrement *E*, telle que *c=E(k) ;*
- une étape pour diffuser ledit mot de contrôle chiffré *c* au travers d'un réseau de diffusion à destination de terminaux dont ledit terminal pirate ;
- une étape pour observer le réseau pirate consistant à mesurer une probabilité *p*(*k*|*v*) de constater la transmission effective d'un mot de contrôle *k'* de valeur *k,* sachant la valeur de *v* ;
- une étape pour identifier consistant à retourner une valeur directement liée à l'identificateur *i* d'un dispositif ayant produit un mot de contrôle *k*' émis au travers du réseau pirate, à partir de la valeur de *v* et de la mesure de ladite probabilité *p*(*k*|*v*).

L'invention prévoit également différents modes de réalisation d'un procédé pour identifier un dispositif électronique coopérant avec un terminal apte à émettre au travers d'un réseau pirate un contenu *M*' préalablement élaboré, par ledit terminal, en décodant un contenu chiffré *C* au moyen d'un mot de contrôle *k*' et d'une fonction de décodage *dec* tel que *M'*=*dec*(*k'*,*C*), ledit mot de contrôle *k*' ayant été produit par ledit dispositif, conformément à l'invention, à partir d'un mot de contrôle chiffré *c* conjointement transmis avec *C* au moyen d'un réseau de diffusion.

Un tel procédé comporte :
- une étape pour produire un mot de contrôle *k* consistant à déterminer la valeur d'une composante *v* dudit mot de contrôle ;
- une étape pour produire un mot de contrôle chiffré *c* en chiffrant ledit mot de contrôle *k* au moyen d'une fonction de chiffrement *E* telle que *c=E(k) ;*
- une étape pour produire un contenu chiffré *C* en codant un contenu *M* au moyen dudit mot de contrôle *k* et d'une fonction de codage *enc* telle que *C* = *enc*(*k*,*M*) ;
- une étape pour diffuser conjointement ledit mot de contrôle chiffré *c* et ledit contenu chiffré *C* au travers du réseau de diffusion à destination de terminaux dont ledit terminal pirate ;
- une étape pour observer le flux dudit réseau pirate consistant à mesurer une probabilité *p*(*M*|*v*) de constater la transmission effective d'un contenu *M*' de valeur *M* sachant la valeur de *v* ;
- une étape pour identifier consistant à retourner une valeur directement liée à l'identificateur *i* d'un dispositif ayant produit un mot de contrôle *k'* ayant été exploité par le terminal pirate pour élaborer un contenu *M*' émis au travers du réseau pirate, à partir de la valeur de *v* et de la mesure de ladite probabilité *p*(*M*|*v*).

D'autres caractéristiques et avantages apparaîtront plus clairement à la lecture de la description qui suit et à l'examen des figures qui l'accompagnent parmi lesquelles :
- la figure 1 présente un réseau de diffusion de contenus multimédia protégés selon l'état de la technique ;
- la figure 2a présente des solutions pour tenter de mettre en oeuvre un piratage de contenus multimédia protégés et diffusés au moyen d'un réseau de diffusion selon l'état de la technique ;
- la figure 3 illustre l'architecture fonctionnelle d'un dispositif électronique d'abonné conforme à l'invention ;
- les figures 4a et 4b illustrent respectivement deux modes de réalisation d'un procédé pour produire un mot de contrôle, procédé mis en oeuvre par un dispositif électronique conforme à l'invention ;
- les figures 5, 6 et 7 décrivent respectivement trois modes de réalisation d'un procédé, conforme à l'invention, pour observer un réseau pirate et identifier un dispositif électronique frauduleusement exploité ;

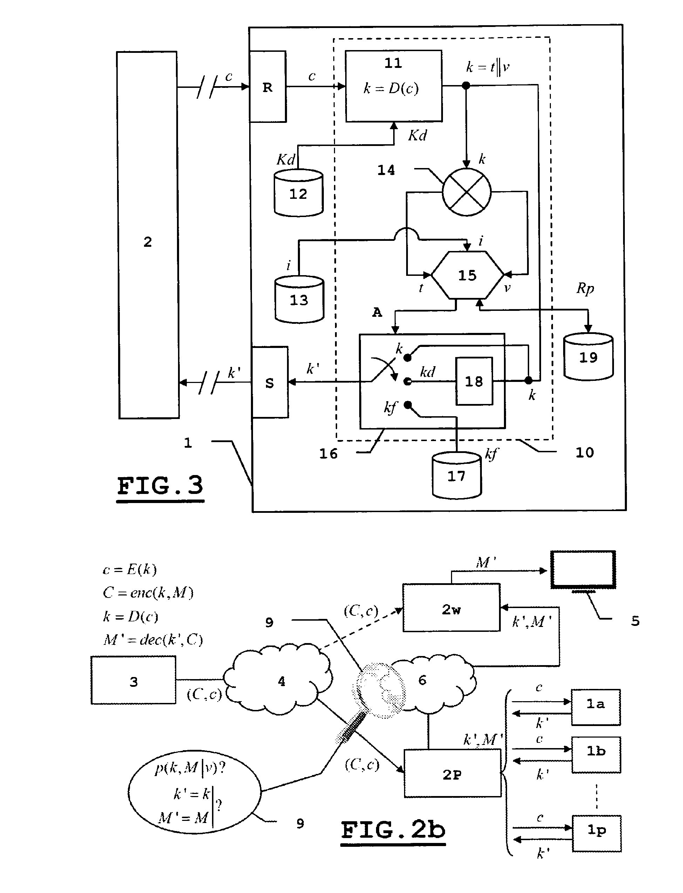

- la figure 2b décrit la mise en oeuvre, selon l'invention, d'un tel procédé pour observer un réseau pirate et identifier un dispositif électronique frauduleusement exploité.

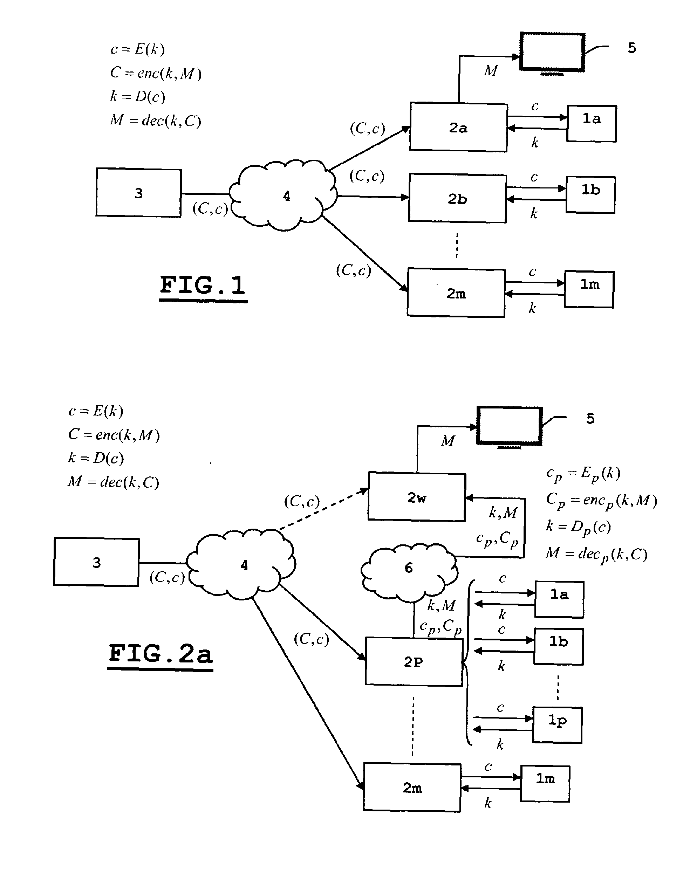

La figure 1 permet de présenter un réseau de diffusion 4 mis en oeuvre par un opérateur de diffusion de contenus protégés. Ainsi, depuis un serveur de contenus 3, sont émis conjointement des mots de contrôle c et des contenus *C* respectivement chiffrés et encodés. Le serveur 3 encode pour cela un contenu clair *M* au moyen d'une fonction d'encodage *enc* et d'un mot de contrôle *k,* ce dernier étant produit par ledit serveur 3. On obtient ainsi un contenu encodé *C* tel que *C = enc(k,M).* Un chiffré *c* du mot de contrôle *k* est également émis ou « broadcasté » conjointement avec le contenu encodé *C*. Pour cela, le serveur chiffre au moyen d'une fonction de chiffrement *E* ledit mot de contrôle *k* pour obtenir *c* tel que *c=E(k)*.

Les mots de contrôle chiffrés *c* et les contenus chiffrés *C* sont transmis, via le réseau de diffusion 4, à des terminaux 2a à 2m. Ces derniers ont la charge respectivement de décoder en temps réel les contenus encodés *C* émis par le serveur 3. Ainsi un terminal - tel que par exemple le décodeur 2a - met en oeuvre une fonction de décodage *dec* et l'applique au contenu encodé *C* pour obtenir le contenu clair *M*. Ce dernier peut être visualisé en utilisant un téléviseur de salon 5 ou toute autre interface adaptée. Pour appliquer la fonction de décodage *dec,* un terminal doit connaître la valeur du mot de contrôle *k* qui a été utilisé par le serveur 3 pour encoder le contenu *M*. Selon l'état de l'art et conformément à la figure 1, un terminal 2a à 2m reçoit un mot de contrôle chiffré *c* tel que *c* = *E(k)* et le transmet à un dispositif électronique sécurisé la à 1m, généralement dédié à un abonné. Le terminal 2a reçoit, au travers du réseau 4, régulièrement des couples (*C,c*) et transmets à un dispositif la les mots de contrôles chiffrés *c*. Le dispositif la peut déchiffrer un mot de contrôle chiffré *c* au moyen d'une fonction de déchiffrement *D* pour obtenir le mot de contrôle *k* ayant servi à encoder un contenu *M.* Ainsi *k=D(c).* Il en est de même pour tout autre terminal, tel que 2b à 2m, chacun coopérant respectivement avec un dispositif 1b à 1m. Selon une variante de réalisation, le serveur 3 peut utiliser un secret, par exemple sous la forme d'une clé *Kc* pour chiffrer un mot de contrôle *k*. Ainsi *c* = *E(Kc,k).* Dans ce cas, un dispositif, tel que le dispositif la à 1m, met en oeuvre une fonction réciproque de déchiffrement *D,* telle que *k=D(Kd,k)* où *Kd* est une clé de déchiffrement connue par le dispositif. Selon les fonctions de chiffrement *E* et de déchiffrement *D,* les clés *Kc* et *Kd* peuvent être identiques. C'est le cas d'un chiffrement / déchiffrement symétrique. En variante, selon un schéma dit de *« broadcast encryption* » - en termes anglo-saxons - *Kc* est une clé publique ou secrète dédiée à l'opérateur et *Kd* est une clé secrète dédiée au dispositif et connue de l'opérateur. Selon cette variante, il existe ainsi plusieurs clés individuelles de déchiffrement et chacun des dispositifs licitement émis et remis aux abonnés dudit opérateur dispose d'une telle clé de déchiffrement individuelle.

La figure 2a permet d'illustrer un premier scénario pour lequel une organisation pirate, que nous nommerons « pirate » parvient à réaliser un commerce frauduleux de contenus protégés.

Selon ce premier scénario, le pirate a contracté tout à fait normalement un abonnement auprès d'un opérateur de contenus. Il peut ainsi disposer d'un dispositif électronique d'abonné, tel qu'une carte à puce 1a. Le pirate est en outre en possession d'un terminal 2P, dit terminal pirate. Ce terminal peut recevoir des couples (*C,c*) depuis un réseau de diffusion 4 tel que celui décrit en liaison avec la figure 1. Le terminal 2P peut coopérer avec ledit dispositif 1a pour lui transmettre les mots de contrôles chiffrés *c*. En retour, le dispositif 1a produit le mot de contrôle *k* en déchiffrant le chiffré *c* au moyen d'une fonction de déchiffrement *D*. Tout à fait normalement, le dispositif 1a délivre au terminal 2P le mot de contrôle *k*. Suivant ce premier scénario, le terminal pirate 2P peut alors émettre au travers d'un réseau pirate 6 les mots de contrôle *k* en temps réels. Un utilisateur indélicat ayant « souscrit » un abonnement auprès du pirate, peut disposer d'un terminal 2w. Ce dernier est adapté pour qu'il reçoive d'une part, depuis le réseau de distribution 4, des contenus encodés *C* (flèche en pointillés) et d'autre part, depuis le réseau pirate 6, les mots de contrôle *k* associés, en clair. Le terminal 2w peut réaliser le décodage des contenus encodés *C* et délivrer les contenus clairs *M* pour qu'ils puissent être visualisés.

Selon un second scénario, le terminal 2P procède au décodage des contenus codés *C* et transmets en temps réel les contenus clairs *M* au travers du réseau pirate 6. Le terminal 2w n'est alors qu'une simple interface pour recevoir les contenus *M* et les transmettre à l'interface 5 pour que l'abonné indélicat puisse profiter frauduleusement du contenu protégé.

Que l'on se place dans les premier ou second scénarii, un pirate peut également souscrire une pluralité d'abonnements auprès d'un ou plusieurs opérateurs. Un terminal pirate 2P peut alors coopérer simultanément avec une pluralité de dispositifs d'abonnés la à 1p et mettre en oeuvre un algorithme de gestion desdits dispositifs plus ou moins complexe. Par exemple, le terminal pirate transmet un mot de contrôle *k* déchiffré majoritairement par les dispositifs 1a à 1p. En variante, un tel terminal 2P peut solliciter aléatoirement tel ou tel dispositif électronique etc.

Un pirate peut en variante éventuellement chiffrer ou encoder, selon un procédé propriétaire, les mots de contrôle *k* et/ou les contenus *M* émis sur un réseau pirate. Ainsi peuvent être transmis respectivement, sur ledit réseau pirate, un chiffré *cₚ = Eₚ(k) - Eₚ* étant une fonction de chiffrement propriétaire du pirate - ou *Cₚ = encₚ(M)* - *encₚ* étant une fonction d'encodage propriétaire du pirate. Un terminal 2w comporte, dans ce cas, des fonctions de déchiffrement *Dₚ* et/ou de décodage *decₚ* réciproques pour délivrer *in fine* les clairs *k=Dₚ(cₚ)* et/ou *M = decₚ(Cₚ)* attendus.

L'invention permet de mettre en échec ces différents scenarii de piratage.

La figure 3 permet d'illustrer différents modes de réalisation prévus par l'invention, pour adapter un dispositif électronique d'abonné 1. Selon l'état de l'art, un tel dispositif comporte des moyens R pour recevoir du monde extérieur - par exemple d'un terminal 2 - un chiffré *c*. Un tel dispositif 1 comporte des moyens de traitement 10 pour mettre en oeuvre 11 une fonction de déchiffrement *D* telle que *k = D(c)* et produire un mot de contrôle *k.* Eventuellement, un tel dispositif peut mettre en oeuvre une fonction *D* couplée à une clé *Kd* de déchiffrement telle que *k = D(Kd,c).* La clé Kd est alors généralement mémorisée par des moyens de mémorisation 12. Selon l'état de l'art, le mot de contrôle produit *k* est délivré par le dispositif 1, via des moyens S, à un terminal 2. L'invention prévoit d'adapter un tel dispositif 1 pour qu'il délivre un mot de contrôle *k*' en lieu et place du mot *k.* Pour cela, l'invention prévoit que le serveur 3, décrit en liaison avec la figure 1, produise un mot de contrôle *k* avant chiffrement, comportant une composante *v* de valeur déterminée. Ainsi un tel mot de contrôle *k* est produit en fonction d'une valeur déterminée de *v* au moyen d'une fonction réversible *F* telle que *k*=*F*(*v*). Selon certains modes de réalisation, la fonction *F* peut être un chiffrement symétrique utilisant une clé secrète connue du serveur 3 et du dispositif 1.

En outre, l'invention prévoit qu'un dispositif 1 comporte un identificateur *i* dédié. Par exemple, cet identifiant est mémorisé par des moyens de mémorisation 13 du dispositif 1. Les moyens de traitement 10 de ce dernier comportent des moyens pour interpréter ladite composante *v* du mot de contrôle *k* obtenu après mise en oeuvre 11 de la fonction de déchiffrement *D.* Selon la valeur de l'identificateur *i* et de la composante *v* extraite de *k,* le dispositif 1 délivre un mot de contrôle *k*' identique à *k* ou distinct de celui-ci. La valeur de *k'* peut dépendre du résultat d'une opération de comparaison 15 entre les valeurs de *v* et de *i.* En d'autres termes, le mot de contrôle *k'* produit et délivré par un dispositif 1, est élaboré 16 à partir du mot déchiffré *k* et d'un identificateur *i* dédié au dispositif 1.

Les moyens de traitement 10 décident A que le mot *k*' soit identique au mot de contrôle *k* ou distinct de celui-ci. A titre d'exemple, pour être distinct de *k, k'* peut prendre une valeur *kf* différente de celle de *k.* Selon un mode de réalisation, l'invention prévoit que *k*' puisse être identique à *k* si et seulement si la composante *v* du mot de contrôle *k* est strictement inférieure à la valeur de l'identificateur *i.* D'autres combinaisons ou algorithmes de décision A pourraient être mis en oeuvre. Il suffit que la valeur de la composante *v*, au regard de la valeur de l'identificateur *i,* puisse influer sur la valeur du mot de contrôle délivré *k'*. Une valeur *kf* peut être produite aléatoirement, dépendre de *k* ou être lue depuis des moyens de mémorisation 17 du dispositif 1.

L'invention prévoit en outre une variante pour laquelle au lieu de produire un mot de contrôle *k'* de valeur *kf* différente de celle de *k,* la valeur de *k'* soit systématiquement égale à *k* mais qu'elle puisse être différée dans le temps. Dans ce cas, lorsque la valeur de *v* est supérieure ou égale à *i,* les moyens de traitement 10 mettent en oeuvre une fonction retard 18 ou équivalente, de sorte que le mot de contrôle *k*' soit délivré après un laps de temps déterminé *d*. On note alors *k'=kd.* Au sens de l'invention, on considère qu'un mot *k'* est distinct de *k* si *k'*=*kf* ou *k'=kd.*

L'adaptation d'un dispositif électronique 1 a pour objectif de produire un mot de contrôle *k'* dont la valeur (ou le temps de réponse) varie en fonction de la teneur du mot de contrôle produit par le serveur 3. Ainsi, il est possible pour un opérateur de révoquer de manière éphémère un dispositif d'abonné selon son identificateur. En effet, si *k'* est différent de *k* ou délivré après un laps de temps suffisant *d, k'* ne permet pas de décoder *C*. Le contenu *M'=dec(k',C)* ne correspond pas au contenu *M* émis par l'opérateur.

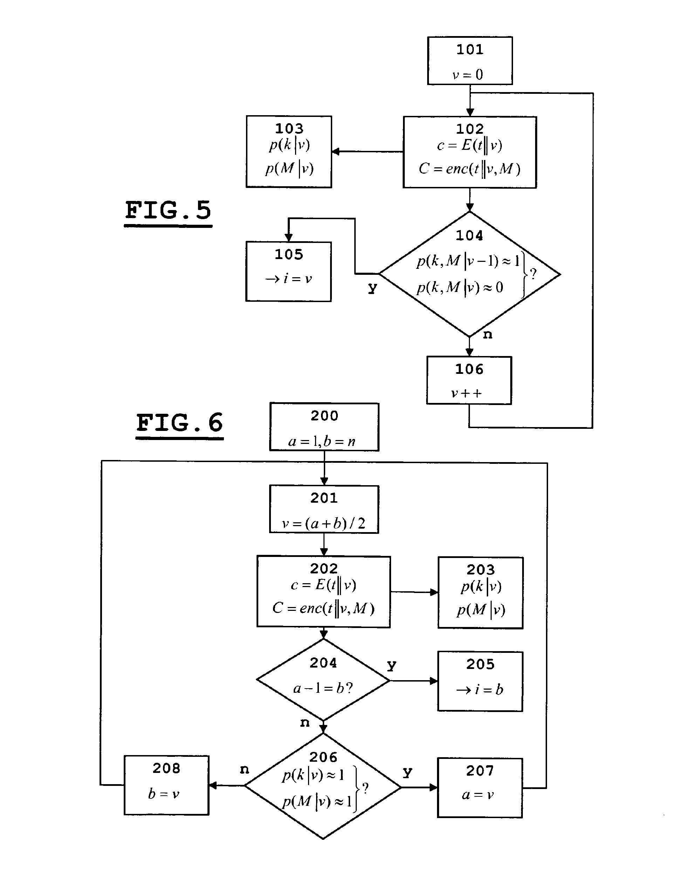

Selon la figure 2b, il devient possible d'observer un réseau pirate 6 pour mesurer 9 une probabilité *p(k*|*v)* de voir transiter en temps réel un mot de contrôle *k*, sachant la valeur de *v*. Grâce à l'invention, étape par étape, révocation éphémère par révocation éphémère, il devient possible d'identifier un dispositif 1 exploité de manière frauduleuse. Nous détaillerons plus loin - en liaison avec les figures 5 à 7 - des modes de réalisation d'un procédé de traçage conforme à l'invention permettant d'identifier un tel dispositif traître.

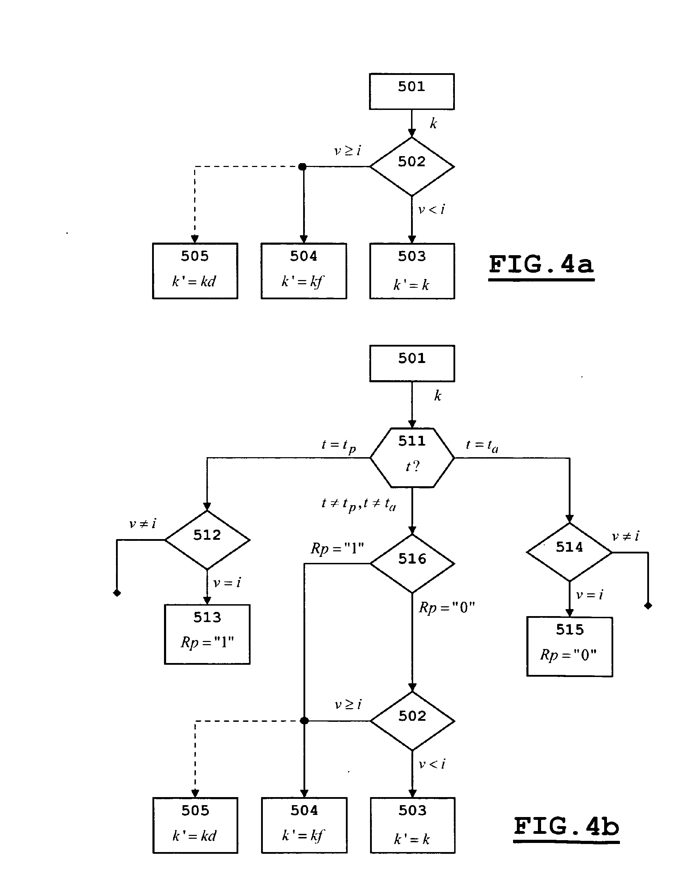

La figure 4a décrit un premier exemple de procédé pour produire un mot de contrôle *k*'. Ce procédé peut être mis en oeuvre par les moyens de traitement d'un dispositif électronique 1 adapté conformément à l'invention.

Ainsi, un tel procédé comporte une première étape 501 pour déchiffrer un mot de contrôle chiffré *c* et obtenir une valeur *k* dudit mot de contrôle. Le procédé comporte une étape 502 pour comparer la valeur d'une composante *v* du mot *k* et la valeur de l'identificateur *i* du dispositif 1. Selon l'exemple de réalisation illustré en figure 4a, la valeur du mot de contrôle *k*' est :
- égale 503 à la valeur de *k* si *v*<*i* ;
- égale 504 à une valeur *kf≠k* si *v ≥ i.*

La figure 4a permet en outre d'illustrer une variante pour laquelle la valeur de *k'* peut être égale 505 - si *v*≥*i* - à *kd*, c'est-à-dire égale à *k* mais délivrée après un laps de temps *d* déterminé et caractéristique.

L'invention prévoit également une variante pour laquelle, il est possible de révoquer, à distance et de manière permanente, un dispositif électronique - adapté conformément à l'invention - notamment si ce dernier est jugé par un opérateur comme étant un dispositif traître, c'est-à-dire exploité frauduleusement par un pirate. Les figures 3 et 4b permettent d'illustrer cette variante.

Pour cela, l'invention prévoit que le mot de contrôle *k* produit par un serveur 3, tel que décrit en liaison avec la figure 1, comporte, outre une composante *v*, une seconde composante *t*. Ainsi la valeur du mot de contrôle *k* peut être obtenue par l'application d'une fonction réversible *F* aux composantes *v* et *t* telle que *k=F(t,v).* Selon un exemple de réalisation, l'application de ladite fonction *F* peut se traduire par l'élaboration d'un mot de contrôle *k* dont la valeur est le résultat d'une concaténation des composantes *v* et *t* telle que *k*=*t*∥*v*. D'autres composantes pourraient par ailleurs être ainsi adjointes aux dites composantes *v* et *t*. Comme l'indique la figure 3, les moyens de traitement 10 d'un dispositif conforme à l'invention sont aptes, à partir du mot de contrôle *k = F*(*t,v*) *à* retrouver et interpréter les composantes *v* et *t*. Un premier mode de réalisation peut consister à prévoir une composante *t* pouvant prendre une valeur prédéterminée *tₚ.*

En liaison avec la figure 4b, un procédé pour produire un mot de contrôle *k*' peut alors comporter une étape 511, mise en oeuvre après l'étape 501 pour déchiffrer le chiffré *c*, pour interpréter la valeur de la composante *t.* Si celle-ci est égale par exemple à *tₚ,* le procédé comporte une étape 513 pour écrire en mémoire une information *Rp (Rp="1")* pour indiquer que le dispositif 1 est révoqué de manière permanente. Cette étape est mise en oeuvre si et seulement si la composante *v* est égale à l'identificateur *i* du dispositif. En outre, selon cette variante, le procédé pour produire *k*' ne met en oeuvre la comparaison 502, telle que décrite en figure 4a, que si l'information mémorisée *Rp* indique (*Rp*="0") que le dispositif n'est pas révoqué de manière permanente. Dans le cas contraire, le procédé produit 504 ou 505, *k*'=*kf* ou *k'=kd,* indépendamment de la valeur de *v*. En produisant un mot de contrôle *k=F(tₚ,i),* par exemple *k=tₚ*∥*i,* depuis le serveur 3, un opérateur peut révoquer le dispositif dont l'identificateur est égal à *i*, sans gêner pour autant l'émission du contenu protégé à destination de ses abonnés réguliers.

L'invention prévoit en outre une variante pour laquelle, il est possible de réhabiliter un dispositif révoqué de manière permanente - conformément au procédé précédent.

De manière réciproque, l'invention prévoit ainsi que la composante *t* puisse être égale à une valeur caractéristique *tₐ*≠*tₚ.* L'étape 511 permet alors d'interpréter la valeur de la composante *t* et de déclencher une étape 515 pour effacer une éventuelle information *Rp* indiquant une révocation permanente du dispositif (*Rp*="0") . Cette étape 515 est mise en oeuvre si et seulement si *t=tₐ* et si *v=i.* Ainsi, il est possible de mettre en oeuvre un procédé pour réhabiliter un dispositif révoqué en produisant *k=F(tₐ,i),* par exemple *k=tₐ*∥*i,* au niveau du serveur 3 de l'opérateur.

En variante, l'invention prévoit que la composante *t* puisse prendre une valeur caractéristique *tₑ*, telle que *tₑ* ≠ *tₚ* et *tₑ* ≠ *tₐ*, pour mettre en oeuvre un procédé pour produire *k'* conformément à l'invention. Ainsi, si *t* ≠ *tₑ, t* ≠ *tₚ* et *t* ≠ *tₐ* alors le procédé pour produire *k'* produit *k'=k* quelle que soit la valeur de *v*. Dans ce cas, un dispositif adapté selon l'invention, se comporte comme un dispositif conforme à l'état de la technique.

Selon une autre variante, l'invention permet à un opérateur de pouvoir déclencher, pour un dispositif particulier ou pour l'ensemble des dispositifs d'abonné considérés, une mise à jour de l'identificateur *i*. Ainsi, l'invention prévoit de pouvoir adapter un tel dispositif pour qu'il comporte des moyens pour détecter une valeur particulière de la composante *t* et des moyens pour mettre à jour l'identificateur *i* du dispositif.

Dans le cas d'une demande de mise à jour dédiée à un dispositif, ladite valeur particulière peut être égale à une valeur déterminée *t=tᵢᵤ.* Si *t=tᵢᵤ.* et si *v=i* alors le dispositif dont l'identificateur est égale à *i*=*v* peut mettre à jour de son identificateur *i.* A titre d'exemple, lesdits moyens pour mettre à jour un identificateur consistent à écraser la valeur courante de l'identificateur *i* par la valeur suivante *i'* comprise dans une liste circulaire mémorisée par ledit dispositif. En variante, lesdits moyens peuvent être aptes à mettre en oeuvre une fonction Φ(*i*) pour produire une nouvelle valeur *i*' de l'identificateur *i*, telle que *i*' = Φ(*i*).

Pour pouvoir transmettre une demande de mise à jour globale des identificateurs à destination de l'ensemble des dispositifs, l'invention prévoit qu'un tel dispositif puisse être adapté pour que les moyens pour détecter soient en mesure de détecter une valeur déterminée *t*=*t_{gu}*.

Tout dispositif déclenche alors une mise à jour de son identificateur *i*. Selon un mode de réalisation, la valeur de la composante *v* peut être exploitée par lesdits moyens pour mettre à jour l'identificateur. Ainsi, dans le cadre d'un liste, *v* peut être un rang au sein d'une liste d'identificateurs, un indice pour choisir une liste parmi une pluralité ou encore un élément de diversification pour une fonction Φ, telle que *i*'=Φ(*i*,*v*). Toute autre mode de réalisation pourrait être considéré, au sens de l'invention, du moment qu'un identificateur peut être mis à jour par un dispositif depuis le réseau de diffusion.

La figure 2b permet d'illustrer la mise en oeuvre d'un procédé pour observer un réseau pirate 6 et identifier un dispositif traître 1a à 1p. La figure 2b reprend les éléments décrits en liaison avec la figure 2a. Ainsi un terminal 2P reçoit des couples (*C,c*) depuis un réseau de diffusion 4. Le terminal 2P coopère avec un ou plusieurs dispositifs 1a à 1p pour leur transmettre les mots de contrôles chiffrés *c*. En retour, un dispositif 1a à 1p produit le mot de contrôle *k* en déchiffrant le chiffré c au moyen d'une fonction de déchiffrement *D* et le délivre au terminal 2P. Ce dernier peut émettre au travers du réseau pirate 6 les mots de contrôle *k* en temps réel. Un terminal 2w peut recevoir d'une part, depuis le réseau de distribution 4, des contenus encodés *C* et d'autre part, depuis le réseau pirate 6, des mots de contrôle *k* en clair. Le terminal 2w peut réaliser le décodage des contenus encodés *C* et délivrer les contenus clairs *M* pour qu'ils puissent être visualisés.

L'invention prévoit l'utilisation de moyens 9 pour observer le réseau pirate 6. Cette observation consiste à faire évoluer la valeur de la composante *v* des mots de contrôle *k* produits par le serveur 3, en temps réel et selon un procédé décrit en liaison avec les figures 5 à 7. On mesure alors, pour chaque valeur successive de *v*, la probabilité *p*(*k*|*v*) selon laquelle le canal ou le réseau pirate 6 fonctionne correctement - c'est-à-dire que des mots de contrôle *k*' = *k* sont transmis au travers du réseau 6. En se basant sur cette observation, un opérateur parvient à identifier au moins un dispositif traître utilisé par un décodeur ou terminal pirate 2P, parmi les dispositifs 1a à 1p. Dès qu'un dispositif traître 1i est identifié, celui-ci peut être révoqué en transmettant un mot de contrôle chiffré *c* = *E(F(tₚ,i*)). Ainsi le dispositif d'identificateur *i* est révoqué de manière permanente. Si le réseau pirate 6 continue de fonctionner correctement, le procédé de traçage décrit ci-dessus est itéré jusqu'à ce que ledit réseau 6 soit hors de fonctionnement - l'ensemble des dispositifs traîtres ayant été révoqués.

Comme nous l'avons vu pour la figure 2a, un second scénario de piratage peut consister à émettre non plus des mots de contrôle *k'=k* sur le réseau 6 mais directement des contenus en clair *M*' = *M.* La probabilité mesurée est donc pour une valeur de *v*, la probabilité *p*(*M*|*v*) de voir transiter en temps réel des contenus *M*'=*M*.

En outre, comme nous l'avons également vu pour la figure 2a, un troisième scénario de piratage peut consister à émettre non plus des mots de contrôle *k'=k* ou des contenus en clair *M'=M* sur le réseau 6 mais des chiffrés *cₚ* = *Eₚ*(*k*') et/ou *Cₚ* = *encₚ*(*M*')*.* Pouvoir mesurer la probabilité *p(k,M*|*v*) pour une valeur de *v*, de voir transiter en temps réel des contenus *M'*=*M* ou des mots de contrôle *k'=k,* sous-entend que l'opérateur de diffusion - ou toute entité dûment habilitée par ce dernier pour mettre en oeuvre un procédé pour observer un réseau pirate - est apte à mettre en oeuvre des fonctions réciproques *Dₚ* et/ou *decₚ* telle que *k'=Dₚ(cₚ)* et/ou *M'=decₚ(Cₚ).*

La figure 5 présente un premier mode de réalisation d'un procédé pour identifier un dispositif électronique traître 1, 1a, ..., 1p, conforme à l'invention.

Ce procédé de traçage comporte une première étape 101 consiste à initialiser préalablement *v* à 0.

Une étape 102 permet au serveur 3 de produire un mot de contrôle chiffré *c* en chiffrant ledit mot de contrôle *k* = *F*(*t*,*v*), par exemple *k*=*t*∥*v*, au moyen d'une fonction de chiffrement *E,* telle que *c=E(k).* Conjointement, un message encodé *C=enc(k,M)* est généré. Un couple (*C,c*) est diffusé au travers d'un réseau de diffusion à destination de terminaux dont un terminal pirate.

Une étape 103 pour observer le réseau pirate consiste à mesurer une probabilité *p(k*|*v)* de constater la transmission effective d'un mot de contrôle *k*' identique à *k*, sachant la valeur de *v*. On entend par « transmission effective d'un mot de contrôle *k*' identique à *k* », la transmission d'un tel mot, sans aucun décalage temporel lié notamment à la mise en oeuvre d'une fonction retard 18 telle que décrite précédemment - en liaison avec la figure 3. Dans ce cas, au sens de l'invention, la transmission retardée d'un mot de contrôle *k'=kd,* n'est pas considérée comme étant une « transmission effective d'un mot de contrôle *k'* identique à *k* ».

Cette étape peut en variante consister à mesurer une probabilité *p*(*M*|*v*) de constater la transmission effective d'un contenu *M'* de valeur *M*, sachant la valeur de *v*. Nous noterons *p*(*k,M*|*v*) ladite probabilité couvrant les deux variantes.

Le procédé comporte en outre une étape 106 consistant à incrémenter la valeur de la composante *v* tant que la probabilité, sachant la valeur de *v*, de constater la transmission effective d'un mot de contrôle *k*' de valeur *k* ou d'un contenu *M*' de valeur *M* est proche de 1.

Le procédé comporte une étape 105 pour retourner la valeur de *v* lorsque la mesure de la probabilité *p*(*k*,*M*|*v*) de constater la transmission effective d'un mot de contrôle *k'* identique à *k* ou d'un contenu *M*' de valeur *M* est proche de 0 alors que la mesure de ladite probabilité *p*(*k,M*|*v*-1) sachant la valeur de *v*-1 est proche de 1. Le dispositif dont l'identifiant est *i*=*v* est reconnu comme étant un dispositif traître.

Si *n* est le nombre de dispositifs émis par un opérateur et que les identificateurs desdits dispositifs sont compris respectivement dans [1,*n*], alors un tel procédé permet d'identifier un dispositif traître en *n* mesures de probabilités.

La figure 6 permet d'illustrer un deuxième mode de réalisation d'un procédé pour identifier un dispositif traître conforme à l'invention.

Selon ce procédé, on va procéder par dichotomie et obtenir un résultat en log *n* mesures de la probabilité *p(k,M*|*v*).

Ainsi, un tel procédé comporte une première étape 200 consistant à initialiser *a* et *b,* deux nombres tels que *a*=1 et *b=n, n* étant la valeur maximale de la composante *v* d'un mot de contrôle produit par un serveur 3 d'un opérateur.

La valeur de la composante *v* est calculée en 201 telle que *v*=(*a+b)*/2.

Le procédé comporte une étape 202 pour émettre un couple (*C,c*) à destination de terminaux. Le procédé consiste alors à mesurer 203 une probabilité *p*(*k*,*M*|*v*) de constater la transmission effective d'un mot de contrôle *k*' identique à *k* ou d'un contenu *M*' de valeur *M*, sachant la valeur de *v*.

En 204, le procédé consiste à évaluer si *a*-1=*b*.

Dans l'affirmative, alors le procédé retourne en 205 *i=b.* Le dispositif dont l'identificateur est égal à *i* est reconnu comme étant un dispositif traître.

Dans le cas contraire, le procédé consiste à évaluer, en 206, la probabilité *p*(*k,M*|*v*) de constater la transmission effective, sur le réseau pirate 6, d'un mot de contrôle *k*' identique à *k* ou d'un contenu *M*' de valeur *M*, sachant la valeur *v*.

Si ladite probabilité est proche de 1 alors, le procédé consiste à affecter 207 à *a* la valeur de *v* et à revenir à l'étape 201. Dans le cas contraire, le procédé consiste, en 208, à affecter à *b* la valeur de *v* et à revenir à l'étape 201.

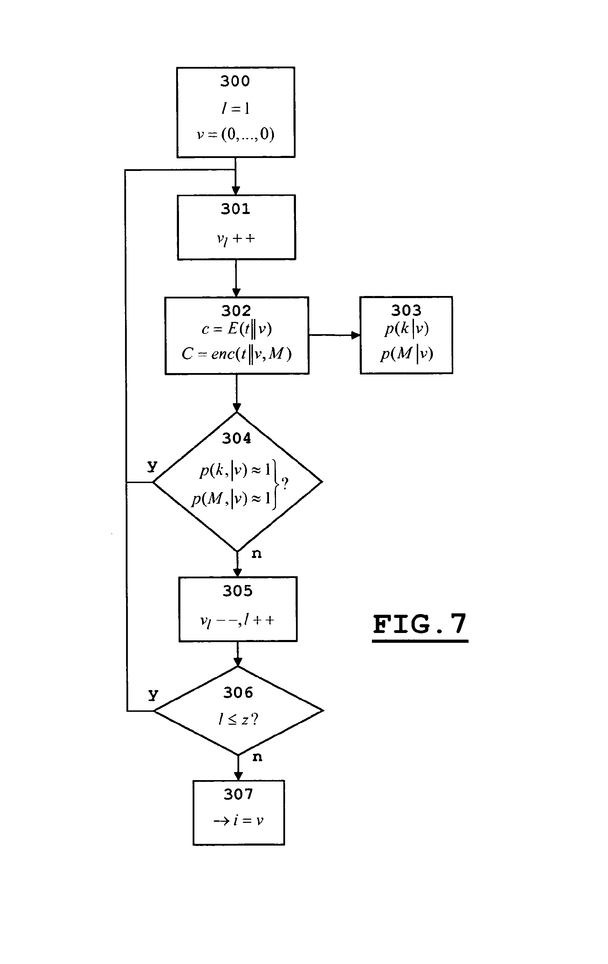

La figure 7 permet de présenter un troisième mode de réalisation d'un procédé de traçage pour identifier un dispositif traître.

Selon ce mode de réalisation, l'identificateur *i* est un vecteur de z entiers de valeurs *i*=(*i*₁,...,*i_{z}*) comprises chacune dans un ensemble [1,*m*], *m* et z étant des entiers supérieurs à 1. En outre, la composante *v* est un vecteur de z entiers de valeurs *v*=(*v*₁,...*,v_{z}*) comprises chacune dans un ensemble [0,*m*].

Pour mettre en oeuvre le procédé de traçage, tout dispositif électronique d'abonné produit un mot de contrôle *k*' :
- identique à *k* si la valeur de chaque entier *vₗ* est respectivement strictement inférieure à la valeur de chaque entier *iₗ* pour tout *l* compris entre 1 et *z*,
- distinct de *k* (dont la valeur *k'*=*k_{f}* est différente de celle *k*, voire émise avec un retard telle que *k'=kd,* dans le cas contraire.

Le procédé pour tracer un dispositif traître consiste tout d'abord à initialiser en 300 un entier *l* tel que *l*=1 et la composante *v*, en tant que vecteur de *z* entiers, telle que *v*=(0,...,0).

Le procédé comporte une étape 301 pour incrémenter *vₗ* tant que, en 304, la probabilité sachant la valeur de *v* de constater respectivement la transmission effective d'un mot de contrôle *k*' identique à *k* ou d'un contenu *M*' identique à *M* sur un réseau pirate est proche de 1.

Dans le cas contraire, le procédé consiste, en 305, à décrémenter *vₗ* et à incrémenter *l* tant que, en 306, la valeur de *l* est inférieure ou égale à *z*. Dans ce cas, le procédé consiste à revenir à l'étape 301.

L'étape 307 pour identifier un dispositif traître consiste à retourner la valeur de *v* lorsque, en 305, la valeur de *l* devient supérieure à *z*. Le dispositif dont l'identificateur est *i*=*v* est identifié comme étant un dispositif traître.

Ainsi selon ce procédé de traçage, un dispositif traître est reconnu en *z.m* mesures de probabilité.

Pour obtenir la valeur minimale de *z.m* avec *m^{z}* ≥ *n*, *n* étant le nombre de dispositifs, on obtient *m*=3, z = ┌log₃ *n*┐ et *z.m* = 3.┌log₃ *n*┐ mesures de probabilités.

L'invention prévoit en outre que, pour identifier un dispositif traître, il soit possible de transmettre un ou plusieurs mots de contrôles additionnels *k*₁,...,*kₓ* en sus du mot de contrôle *k*. Dans ce cas, un entête de message permet à tout dispositif d'abonné de prendre en considération le mot de contrôle pertinent. Selon cette variante, un procédé pour produire un mot de contrôle conforme à l'invention peut comporter une étape préalable de décodage dudit entête pour exploiter le mot de contrôle pertinent. Ces différents mots de contrôles peuvent être identiques, valides, ou pour partie, invalides - c'est-à-dire ne permettant pas de décoder un contenu.

## Revendications

1. Procédé pour produire un mot de contrôle *k',* ledit procédé étant mis en oeuvre par des moyens de traitement (10) d'un dispositif électronique (1) coopérant avec un terminal (2), ledit dispositif comportant des moyens (R) pour recevoir un mot de contrôle chiffré c depuis le terminal (2) et des moyens (S) pour délivrer ledit mot de contrôle *k*' produit audit terminal (2), ledit procédé comportant une étape pour appliquer (501) au mot de contrôle chiffré *c* une fonction de déchiffrement *D* et calculer ainsi un mot déchiffré *k* tel que *k = D(c),*
**caractérisé en ce que** le mot déchiffré *k* comporte une composante *v* et **en ce que** le procédé comporte une étape pour produire (502, 503, 504, 505) le mot de contrôle *k*' respectivement identique (503) ou distinct (504, 505) de *k* selon le résultat d'une opération de comparaison (502) entre la valeur de *v* et celle d'un identificateur *i* dédié au dispositif.

2. Procédé selon la revendication précédente, **caractérisé en ce que** l'étape pour produire le mot de contrôle *k*' distinct de *k* consiste à produire un mot *k'=kf* dont la valeur *kf* est différente de la valeur de *k.*

3. Procédé selon la revendication 1, **caractérisé en ce que** l'étape pour produire le mot de contrôle *k'* distinct de *k* consiste à mettre en oeuvre une fonction retard (18) de sorte que les moyens pour délivrer (S) délivrent ledit mot de contrôle *k'=kd* dont la valeur est égale à *k* après un laps de temps déterminé.

4. Procédé selon la revendication 1, **caractérisé en ce que** l'étape pour produire le mot de contrôle *k*' consiste à produire un mot :
- identique à *k* si la valeur de la composante *v* est strictement inférieure à la valeur de l'identificateur *i* ;
- distinct de *k* si la valeur de la composante *v* est supérieure ou égale à la valeur de l'identificateur *i.*

5. Procédé selon la revendication 1, **caractérisé en ce que** :
- l'identificateur *i* est un vecteur de *z* entiers de valeurs *i=(i₁*,...,*i_{z}*) comprises dans un ensemble [1,*m*], *m* et z étant des entiers supérieurs à 1 ;
- la composante *v* est un vecteur de *z* entiers de valeurs *v*=(*v*₁,...,*v_{z}*) comprises dans un ensemble [0,*m*] ;
et **en ce que** l'étape pour produire le mot de contrôle *k*' consiste à produire un mot :
- identique à *k* si la valeur de chaque entier *vₗ* est respectivement strictement inférieure à la valeur de chaque entier *iₗ* pour tout *l* compris entre 1 et *z*,
- distinct de *k*, dans le cas contraire.

6. Procédé selon l'une quelconque des revendications précédentes, **caractérisé en ce que** le mot de contrôle comporte une composante *t* et **en ce que** le procédé comporte une étape pour interpréter (511) ladite composante *t* pour produire le mot de contrôle *k'* à partir de *v*, *i* et *k*.

7. Procédé selon la revendication précédente, **caractérisé en ce qu'**il comporte une étape pour mémoriser (513) une information *Rp* pour indiquer une révocation permanente du dispositif si la composante *t* est égale (511) à une valeur prédéterminée *tₚ* et si la composante *v* est égale (512) à la valeur de l'identificateur *i*.

8. Procédé selon la revendication 6 **caractérisé en ce qu'**il comporte une étape pour effacer (515) une information *Rp* indiquant une révocation permanente du dispositif si la composante *t* est égale (511) à une valeur prédéterminée *tₐ* et si la composante *v* est égale (514) à la valeur de l'identificateur *i*.

9. Dispositif électronique (1) coopérant avec un terminal (2, 2a, ..., 2P), ledit dispositif comportant :
- des moyens (R) pour recevoir un mot de contrôle chiffré c depuis le terminal ;
- des moyens de traitement (10) pour produire un mot de contrôle *k*' à partir dudit mot de contrôle chiffré *c* ;
- des moyens (S) pour délivrer, audit terminal (2), ledit mot de contrôle produit en réponse à la réception du mot de contrôle chiffré *c,*
**caractérisé en ce que** le dispositif comporte des moyens (13) pour mémoriser un identificateur *i* et, **en ce que** lesdits moyens de traitement (10) sont agencés pour mettre en oeuvre un procédé conforme aux revendications 1 ou 2 pour produire le mot de contrôle *k*'.

10. Dispositif électronique selon la revendication précédente, **caractérisé en ce qu'**il comporte des moyens (18) pour mettre en oeuvre une fonction retard coopérant avec les moyens de traitement et **en ce que** lesdits moyens de traitement sont agencés pour mettre en oeuvre un procédé conforme à la revendication 3 de sorte que le mot de contrôle *k*' puisse être délivré par les moyens pour délivrer (S) après un laps de temps déterminé.

11. Dispositif électronique selon les revendications 9 ou 10, **caractérisé en ce qu'**il comporte des moyens (19) pour mémoriser une information *Rp* indiquant une révocation permanente dudit dispositif et **en ce que** les moyens de traitement (10) coopèrent avec lesdits moyens pour mémoriser (19) pour mettre en oeuvre un procédé conforme aux revendications 7 ou 8 pour produire le mot de contrôle *k*'.

12. Dispositif électronique selon l'une quelconque des revendications 9 à 11 **caractérisé en ce qu'**il comporte des moyens (17) pour mémoriser ou générer un mot d'une valeur *kf* différente de la valeur de *k.*

13. Procédé pour identifier un dispositif électronique (1, 1a, ..., 1p) conforme à l'une quelconque des revendications 9 à 12 coopérant avec un terminal pirate (2P) apte à émettre au travers d'un réseau pirate (6) un mot de contrôle *k*' produit par ledit dispositif selon un procédé conforme à l'une quelconque des revendications 1 à 8, ledit procédé pour identifier étant **caractérisé en ce qu'**il comporte :
- une étape pour produire un mot de contrôle *k* consistant à déterminer (101, 106, 201, 207, 208, 300, 301, 305) la valeur d'une composante *v* dudit mot de contrôle ;
- une étape pour produire (102, 202, 302) un mot de contrôle chiffré *c* en chiffrant ledit mot de contrôle *k* au moyen d'une fonction de chiffrement *E*, telle que *c=E(k) ;*
- une étape pour diffuser (102, 202, 302) ledit mot de contrôle chiffré c au travers d'un réseau de diffusion (4) à destination de terminaux (2, 2a, 2b 2c, 2P) dont ledit terminal pirate (2P) ;
- une étape pour observer le réseau pirate (6) consistant à mesurer (103, 203, 303) une probabilité *p*(*k*|*v*) de constater la transmission effective d'un mot de contrôle *k*' de valeur *k*, sachant la valeur de *v* ;
- une étape pour identifier consistant à retourner (105, 205, 307) une valeur directement liée à l'identificateur *i* d'un dispositif ayant produit un mot de contrôle *k*' émis au travers du réseau pirate, à partir (104, 204, 206, 304, 306) de la valeur de *v* et de la mesure de ladite probabilité *p*(*k*|*v*).

14. Procédé pour identifier un dispositif électronique (1, 1a, 1b ,1c) conforme à l'une quelconque des revendications 9 à 12 coopérant avec un terminal (2P) apte à émettre au travers d'un réseau pirate (6) un contenu *M*' préalablement élaboré, par ledit terminal, en décodant un contenu chiffré *C* au moyen d'un mot de contrôle *k*' et d'une fonction de décodage *dec* tel que *M'*=*dec*(*k'*,*C*), ledit mot de contrôle *k*' ayant été produit par ledit dispositif selon un procédé conforme à l'une quelconque des revendications 1 à 8 à partir d'un mot de contrôle chiffré *c* conjointement transmis avec *C* au moyen d'un réseau de diffusion (4), ledit procédé pour identifier étant **caractérisé en ce qu'**il comporte:
- une étape pour produire un mot de contrôle *k* consistant à déterminer (101, 106, 201, 207, 208, 300, 301, 305) la valeur d'une composante *v* dudit mot de contrôle ;
- une étape pour produire (102, 202, 302) un mot de contrôle chiffré *c* en chiffrant ledit mot de contrôle *k* au moyen d'une fonction de chiffrement *E* telle que *c=E(k) ;*
- une étape pour produire (102, 202, 302) un contenu chiffré *C* en codant un contenu *M* au moyen dudit mot de contrôle *k* et d'une fonction de codage *enc* telle que *C=enc(k,M) ;*
- une étape pour diffuser (102, 202, 302) conjointement ledit mot de contrôle chiffré c et ledit contenu chiffré *C* au travers du réseau (4) de diffusion à destination de terminaux (2, 2a, 2P) dont ledit terminal pirate (2P) ;
- une étape pour observer le flux dudit réseau pirate (6) consistant à mesurer (103, 203, 303) une probabilité *p*(*M*|*v*) de constater la transmission effective d'un contenu *M*' de valeur *M* sachant la valeur de *v* ;
- une étape pour identifier consistant à retourner (105, 205, 307) une valeur directement liée à l'identificateur *i* d'un dispositif ayant produit un mot de contrôle *k*' ayant été exploité par le terminal pirate pour élaborer un contenu *M*' émis au travers du réseau pirate, à partir (104, 204, 206, 304, 306) de la valeur de *v* et de la mesure de ladite probabilité *p*(*M*|*v*).

15. Procédé selon les revendications 13 ou 14, lorsque le procédé pour produire un mot de contrôle *k*' est conforme à l'une quelconque des revendications 1 à 4, **caractérisé en ce qu'**il comporte une ou plusieurs itérations pour lesquelles :
- l'étape pour déterminer la composante *v* consiste :
- à initialiser (101) préalablement *v* à 0 ;
- à incrémenter (106) la valeur de la composante *v* tant que la probabilité, sachant la valeur de *v*, de constater la transmission effective d'un mot de contrôle *k'* de valeur *k* ou d'un contenu *M*' de valeur *M* est proche de 1 ;
- l'étape pour identifier consiste à retourner (105) la valeur de *v* lorsque (104) la mesure de ladite probabilité, sachant la valeur de *v*, de constater la transmission effective d'un mot de contrôle *k'* de valeur *k* ou d'un contenu *M*' de valeur *M* est proche de 0 alors que la mesure de ladite probabilité sachant la valeur de *v*-1 est proche de 1.

16. Procédé selon les revendications 13 ou 14, lorsque le procédé pour produire un mot de contrôle *k*' est conforme l'une quelconque des revendications 1 à 4, **caractérisé en ce qu'**il comporte une ou plusieurs itérations pour lesquelles :
- l'étape pour déterminer la composante *v* consiste :
- à initialiser (200) préalablement *a* et *b,* deux nombres tels que *a* = 1 et *b = n , n* étant la valeur maximale de la composante *v* ;
- à calculer (201) la valeur de la composante *v* telle que *v* = (*a* + *b*) / 2 ;
- à affecter (207) à *a* la valeur courante de *v* tant que (206) la probabilité sachant la valeur de *v* de constater la transmission effective d'un mot de contrôle *k*' de valeur *k* ou d'un contenu *M*' de valeur *M* est proche de 1 ;
- à affecter (208) à *b* la valeur courante de *v* tant que (206) la probabilité sachant la valeur de *v* de constater la transmission effective d'un mot de contrôle *k*' de valeur *k* ou d'un contenu *M*' de valeur *M* n'est pas proche de 1 ;
- l'étape pour identifier consiste à retourner (205) la valeur de *v* lorsque (204) la valeur *a*-1 est égale à *b.*

17. Procédé selon les revendications 13 ou 14, lorsque le procédé pour produire un mot de contrôle *k*' est conforme à la revendication 5, **caractérisé en ce qu'**il comporte une ou plusieurs itérations pour lesquelles :
- l'étape pour déterminer la composante *v* consiste :
- à initialiser (300) préalablement un entier *l* tel que *l*=1 et *v*, en tant que vecteur de z entiers, telle que *v*=(0,...,0) ;
- à incrémenter *v*, (301) tant que (304) la probabilité sachant la valeur de *v* de constater respectivement la transmission effective d'un mot de contrôle *k*' de valeur *k* ou d'un contenu *M*' de valeur *M* est proche de 1 ;
- à décrémenter *vₗ* (305) et à incrémenter *l* tant que (306) la probabilité sachant la valeur de *v* de constater la transmission effective d'un mot de contrôle *k*' de valeur *k* ou d'un contenu *M'* de valeur *M* n'est pas proche de 0 et que (306) la valeur de *l* est inférieure ou égale à *z*;
- l'étape pour identifier consiste à retourner (307) la valeur de *v* lorsque (306) la valeur de *l* est supérieure à *z.*

## Patentansprüche

1. Verfahren zum Erzeugen eines Steuerworts *k',* wobei das Verfahren durch Verarbeitungsmittel (10) einer elektronischen Vorrichtung (1) ausgeführt wird, die mit einem Terminal (2) zusammenwirkt, wobei die Vorrichtung Mittel (R) zum Empfangen eines verschlüsselten Steuerworts *c* von dem Terminal (2) sowie Mittel (S) zum Senden des erzeugten Steuerworts *k'* zu dem Terminal (2) umfasst, wobei das Verfahren einen Schritt des Anwendens (501) einer Entschlüsselungsfunktion *D* auf das verschlüsselte Steuerwort *c* und zum Berechnen eines entschlüsselten Wortes *k* beinhaltet, so dass *k = D*(*c*) ist,
**dadurch gekennzeichnet, dass** das entschlüsselte Wort *k* eine Komponente *v* enthält, und dadurch, dass das Verfahren einen Schritt des Erzeugens (502, 503, 504, 505) des Steuerworts *k'* jeweils identisch (503) mit oder unterschiedlich (504, 505) von *k* gemäß dem Ergebnis eines Vergleichsvorgangs (502) zwischen dem Wert von *v* und dem einer für die Vorrichtung dedizierten Kennung *i* beinhaltet.

2. Verfahren nach dem vorherigen Anspruch, **dadurch gekennzeichnet, dass** der Schritt des Erzeugens des Steuerworts *k'* unterschiedlich von *k* im Erzeugen eines Wortes *k'*=*kf* besteht, dessen Wert *kf* sich vom Wert von *k* unterscheidet.

3. Verfahren nach Anspruch 1, **dadurch gekennzeichnet, dass** der Schritt des Erzeugens des Steuerworts *k'* unterschiedlich von *k* im Ausführen einer Verzögerungsfunktion (18) besteht, so dass die Sendemittel (S) das Steuerwort *k'*=*kd,* dessen Wert gleich *k* ist, nach Ablauf einer bestimmten Zeit senden.

4. Verfahren nach Anspruch 1, **dadurch gekennzeichnet, dass** der Schritt des Erzeugens des Steuerworts *k'* im Erzeugen eines Wortes besteht:
- das mit *k* identisch ist, wenn der Wert der Komponente *v* strikt kleiner ist als der Wert der Kennung *i*;
- das sich von *k* unterscheidet, wenn der Wert der Komponente *v* gleich oder größer ist als der Wert der Kennung *i*.

5. Verfahren nach Anspruch 1, **dadurch gekennzeichnet, dass**:
- die Kennung *i* ein Vektor von *z* ganzen Zahlen mit den Werten *i=* (*i₁,* ... , *i_{z}*) ist, die in einer Menge [1,*m*] enthalten sind, wobei *m* und *z* ganze Zahlen größer als 1 sind;
- die Komponente *v* ein Vektor von *z* ganzen Zahlen mit den Werten *v = (v₁, ... , v_{z})* ist, die in einer Menge [0,*m*] enthalten sind;
und dadurch, dass der Schritt des Erzeugens des Steuerworts *k'* im Erzeugen eines Worts besteht:
- das mit *k* identisch ist, wenn der Wert jeder ganzen Zahl *vₗ* jeweils strikt kleiner ist als der Wert jeder ganzen Zahl *iₗ* für alle *l,* die zwischen 1 und *z* enthalten sind,
- das sich im entgegengesetzten Fall von *k* unterscheidet.

6. Verfahren nach einem der vorherigen Ansprüche, **dadurch gekennzeichnet, dass** das Steuerwort eine Komponente *t* enthält, und dadurch, dass das Verfahren einen Schritt des Interpretierens (511) der Komponente *t* zum Erzeugen des Steuerworts *k'* auf der Basis von *v*, *i* und *k* beinhaltet.

7. Verfahren nach dem vorherigen Anspruch, **dadurch gekennzeichnet, dass** es einen Schritt des Speicherns (513) einer Information *Rp* zum Anzeigen eines permanenten Widerrufs der Vorrichtung beinhaltet, wenn die Komponente *t* gleich (511) einem vorbestimmten Wert *tₚ* ist und wenn die Komponente *v* gleich (512) dem Wert der Kennung *i* ist.

8. Verfahren nach Anspruch 6, **dadurch gekennzeichnet, dass** es einen Schritt des Löschens (515) einer Information *Rp* beinhaltet, die einen permanenten Widerruf der Vorrichtung anzeigt, wenn die Komponente *t* gleich (511) einem vorbestimmten Wert *tₐ* ist und wenn die Komponente *v* gleich (514) dem Wert der Kennung *i* ist.

9. Elektronische Vorrichtung (1), die mit einem Terminal (2, 2a, ..., 2P) zusammenwirkt, wobei die Vorrichtung Folgendes umfasst:
- Mittel (R) zum Empfangen eines verschlüsselten Steuerworts c von dem Terminal;
- Verarbeitungsmittel (10) zum Erzeugen eines Steuerworts *k'* auf der Basis des entschlüsselten Steuerworts *c*;
- Mittel (S) zum Senden des Steuerworts, das als Reaktion auf den Empfang des verschlüsselten Steuerworts c erzeugt wurde, zu dem Terminal (2),
**dadurch gekennzeichnet, dass** die Vorrichtung Mittel (13) zum Speichern einer Kennung *i* umfasst, und dadurch, dass die Verarbeitungsmittel (10) so ausgelegt sind, dass sie ein Verfahren nach Anspruch 1 oder 2 zum Erzeugen des Steuerworts *k'* ausführen.

10. Elektronische Vorrichtung nach dem vorherigen Anspruch, **dadurch gekennzeichnet, dass** sie Mittel (18) zum Ausführen einer Verzögerungsfunktion beinhaltet, die mit den Verarbeitungsmitteln zusammenwirken, und dadurch, dass die Verarbeitungsmittel so ausgelegt sind, dass sie ein Verfahren nach Anspruch 3 ausführen, so dass das Steuerwort *k'* von den Sendemitteln (S) nach Ablauf einer bestimmten Zeit zugeführt wird.

11. Elektronische Vorrichtung nach Anspruch 9 oder 10, **dadurch gekennzeichnet, dass** sie Mittel (19) zum Speichern einer Information *Rp* umfasst, die einen permanenten Widerruf der Vorrichtung anzeigt, und dadurch, dass die Verarbeitungsmittel (10) mit den Speichermitteln (19) zusammenwirken, um ein Verfahren nach Anspruch 7 oder 8 zum Erzeugen des Steuerworts *k'* auszuführen.

12. Elektronische Vorrichtung nach einem der Ansprüche 9 bis 11, **dadurch gekennzeichnet, dass** sie Mittel (17) zum Speichern oder Erzeugen eines Wortes mit einem Wert *kf* umfasst, der sich von dem Wert von *k* unterscheidet.

13. Verfahren zum Identifizieren einer elektronischen Vorrichtung (1, 1a, ..., 1p) nach einem der Ansprüche 9 bis 12, das mit einem Hackerterminal (2P) zusammenwirkt, das über ein Hackernetz (6) ein Steuerwort *k'* senden kann, das von der Vorrichtung gemäß einem Verfahren nach einem der Ansprüche 1 bis 8 erzeugt wird, wobei das Identifizierverfahren **dadurch gekennzeichnet ist, dass** es Folgendes beinhaltet:
- einen Schritt des Erzeugens eines Steuerworts *k*, der darin besteht, den Wert von einer Komponente *v* des Steuerworts zu ermitteln (101, 106, 201, 207, 208, 300, 301, 305);
- einen Schritt des Erzeugens (102, 202, 302) eines entschlüsselten Steuerworts *c* durch Entschlüsselung des Steuerworts *k* mittels einer Entschlüsselungsfunktion *E,* so dass *c* = *E*(*k*) ist;
- einen Schritt des Verteilens (102, 202, 302) des entschlüsselten Steuerworts *c* über ein Verteilungsnetz (4) zu den Terminals (2, 2a, 2b, 2c, 2P), unter denen sich das Hackerterminal (2P) befindet;
- einen Schritt des Beobachtens des Hackernetzes (6), der darin besteht, eine Wahrscheinlichkeit *p(k*|*v*) der Feststellung der effektiven Übertragung eines Steuerworts *k'* mit dem Wert *k* bei Kenntnis des Wertes von *v* zu messen (103, 203, 303);
- einen Schritt des Identifizierens, der darin besteht, einen Wert, der direkt mit der Kennung *i* einer Vorrichtung verbunden ist, die ein Steuerwort *k'* erzeugt hat, das über das Hackernetz gesendet wurde, auf der Basis von (104, 204, 206, 304, 306) des Wertes von *v* und des Messwertes der Wahrscheinlichkeit *p(k*|*v)* zurückzugeben (105, 205, 307).

14. Verfahren zum Identifizieren einer elektronischen Vorrichtung (1, 1a, 1b, 1c) nach einem der Ansprüche 9 bis 12, das mit einem Terminal (2P) zusammenwirkt, das über ein Hackernetz (6) einen zuvor erstellten Inhalt *M*' durch das Terminal senden kann, durch Entschlüsselung eines verschlüsselten Inhalts *C* mittels eines Steuerworts *k'* und einer Decodierfunktion *dec,* so dass *M'=dec*(*k',C*) ist, wobei das Steuerwort *k'* von der Vorrichtung mit einem Verfahren nach einem der Ansprüche 1 bis 8 auf der Basis eines verschlüsselten Steuerworts c erzeugt wurde, das zusammen mit *C* mittels eines Verteilungsnetzes (4) übertragen wurde, wobei das Identifizierverfahren **dadurch gekennzeichnet ist, dass** es Folgendes beinhaltet:
- einen Schritt des Erzeugens eines Steuerworts *k,* der darin besteht, den Wert einer Komponente *v* des Steuerworts zu ermitteln (101, 106, 201, 207, 208, 300, 301, 305);
- einen Schritt des Erzeugens (102, 202, 302) eines verschlüsselten Steuerworts *c* durch Verschlüsselung des Steuerworts *k* mittels einer Entschlüsselungsfunktion *E,* so dass *c* = *E*(*k*) ist;
- einen Schritt des Erzeugens (102, 202, 302) eines entschlüsselten Inhalts *C* durch Entschlüsselung eines Inhalts *M* mittels des Steuerworts *k* und einer Codierfunktion *enc,* so dass *C* = *enc*(*k,M*) ist;
- einen Schritt des gemeinsamen Verteilens (102, 202, 302) des entschlüsselten Steuerworts *c* und des entschlüsselten Inhalts *C* über das Verteilungsnetz (4) zu den Terminals (2, 2a, 2P), unter denen sich das Hackerterminal (2P) befindet;
- einen Schritt des Beobachtens des Flusses des Hackernetzes (6), bestehend aus dem Messen (103, 203, 303) einer Wahrscheinlichkeit *p*(*M*|*v*) der Feststellung der effektiven Übertragung eines Inhalts *M'* mit dem Wert *M* unter Kenntnis des Wertes von *v*;
- einen Schritt des Identifizierens, bestehend aus dem Zurückgeben (105, 205, 307) eines Wertes, der direkt mit der Kennung *i* einer Vorrichtung verbunden ist, die ein Steuerwort *k'* erzeugt hat, das von dem Hackerterminal zum Ausarbeiten eines über das Hackernetz gesendeten Inhalts *M*' benutzt wurde, auf der Basis (104, 204, 206, 304, 306) des Wertes von *v* und des Messwertes für die Wahrscheinlichkeit *p*(*M*|*v*).

15. Verfahren nach Anspruch 13 oder 14, wenn das Verfahren zum Erzeugen eines Steuerworts *k'* einem der Ansprüche 1 bis 4 entspricht, **dadurch gekennzeichnet, dass** es eine oder mehrere Iterationen beinhaltet, für die:
- der Schritt des Ermittelns der Komponente *v* besteht aus:
- dem Vorab-Initialisieren (101) von *v* auf 0;
- dem Inkrementieren (106) des Wertes der Komponente *v,* so dass die Wahrscheinlichkeit, unter Kenntnis des Wertes von *v,* der Feststellung der effektiven Übertragung eines Steuerworts *k'* mit dem Wert *k* oder eines Inhalts *M'* mit dem Wert *M* nahe bei 1 ist;
- der Schritt des Identifizierens im Zurückgeben (105) des Wertes von *v* besteht, wenn (104) das Messwert für die Wahrscheinlichkeit, unter Kenntnis des Wertes von *v*, der Feststellung der effektiven Übertragung eines Steuerworts *k'* mit dem Wert *k* oder eines Inhalts *M'* mit dem Wert *M* nahe bei 0 liegt, während das Maß für die Wahrscheinlichkeit unter Kenntnis des Wertes von *v*-1 nahe bei 1 liegt.

16. Verfahren nach Anspruch 13 oder 14, wenn das Verfahren zum Erzeugen eines Steuerworts *k'* einem der Ansprüche 1 bis 4 entspricht, **dadurch gekennzeichnet, dass** es eine oder mehrere Iterationen enthält, für die:
- der Schritt zum Ermitteln der Komponente *v* besteht aus:
- dem Vorab-Initialisieren (200) von a und *b* auf zwei Zahlen, so dass *a =* 1 und *b* = *n* ist, wobei *n* der Höchstwert der Komponente *v* ist;
- dem Berechnen (201) des Wertes der Komponente *v,* so dass *v* = (*a* + *b*)/2 ist;
- dem Zuordnen (207) zu a des laufenden Wertes von *v,* so dass (206) die Wahrscheinlichkeit unter Kenntnis des Wertes von *v* der Feststellung der effektiven Übertragung eines Steuerworts *k'* mit dem Wert *k* oder eines Inhalts *M'* mit dem Wert *M* nahe bei 1 liegt;
- dem Zuordnen (208) zu b des laufenden Wertes von *v,* so dass (206) die Wahrscheinlichkeit unter Kenntnis des Wertes von *v* der Feststellung der effektiven Übertragung eines Steuerworts *k'* mit dem Wert *k* oder eines Inhalts *M*' mit dem Wert *M* nicht nahe bei 1 liegt;
- der Schritt zum Identifizieren im Zurückgeben (205) des Wertes von *v* besteht, wenn (204) der Wert *a*-1 gleich *b ist.*

17. Verfahren nach Anspruch 13 oder 14, wenn das Verfahren zum Erzeugen eines Steuerworts *k'* Anspruch 5 entspricht, **dadurch gekennzeichnet, dass** es eine oder mehrere Iterationen beinhaltet, für die:
- der Schritt des Ermittelns der Komponente *v* besteht aus:
- dem Vorab-Initialisieren (300) einer ganzen Zahl *l,* so dass *l* = 1 ist, und *v* als Vektor von *z* ganzen Zahlen, so dass *v* = (0,...,0) ist;
- dem Inkrementieren von *vₗ* (301), so dass (304) die Wahrscheinlichkeit unter Kenntnis des Wertes von *v* der jeweiligen Feststellung der effektiven Übertragung eines Steuerwortes *k'* mit dem Wert *k* oder eines Inhalts *M'* mit dem Wert *M* nahe bei 1 liegt;
- dem Dekrementieren von *vₗ* (305) und dem Inkrementieren von *l*, so dass (306) die Wahrscheinlichkeit unter Kenntnis des Wertes von *v* der Feststellung der effektiven Übertragung eines Steuerwortes *k'* mit dem Wert *k* oder eines Inhalts *M*' mit dem Wert *M* nicht nahe bei 0 liegt, und so dass (306) der Wert von *l* gleich oder kleiner als *z* ist;
- der Schritt des Identifizierens im Zurückgeben (307) des Wertes von *v* besteht, wenn (306) der Wert von *l* größer als *z* ist.

## Claims

1. A method for producing a control word *k'*, said method being implemented by processing means (10) of an electronic device (1) cooperating with a terminal (2), said device including means (R) for receiving an encrypted control wordcfrom the terminal (2) and means (S) for delivering said produced control word *k'* to said terminal (2), said method including a step for applying (501) a decryption function *D* to the encrypted control word c and thus calculating a decrypted word k such that *k=D(c),*
**characterized in that** the decrypted word *k* includes a component *v* and **in that** the method includes a step (502, 503, 504, 505) for producing the control word *k'* identical to (503) or different from (504, 505) *k*, respectively, based on the result of a comparison operation (502) between the values of v and of an identifier *i* dedicated to the device.

2. The method according to the preceding claim, **characterized in that** the step for producing the control word *k'* from *k* consists of producing a word *k'=kf* whereof the value *kf* is different from the value of *k.*

3. The method according to claim 1, **characterized in that** the step for producing the control word *k'* different from *k* consists of implementing a delay function (18) such that the delivery means (S) deliver said control word *k'*=*kd* whereof the value *kd* is equal to *k* after a predetermined length of time.

4. The method according to claim 1, **characterized in that** the step for producing the control word *k'* consists of producing a word:
- identical to *k* if the value of the component v is strictly lower than the value of the identifier /;
- different from *k* if the value of the component *v* is greater than or equal to the value of the identifier *i*.

5. The method according to claim 1, **characterized in that**:
- the identifier *i* is a vector of *z* integers with values *i*=(*i*₁, ..., *i_{z})* comprised in a set [l,*M*], *M* and *z* being integers greater than 1;
- the component *v* is a vector of *z* integers with values *v=(v₁, ..., v_{z})* comprised in a set [0,*M*]; and **in that** the step for producing the control word *k'* consists of producing a word:
- identical to *k* if the value of each integer *vₗ* is respectively strictly less than the value of each integer *iₗ* for any / comprised between 1 and *z*,
- different from *k*, otherwise.

6. The method according to any one of the preceding claims, **characterized in that** the control word includes a component *t* and **in that** the method includes a step for interpreting (511) said component *t* to produce the control word *k'* from *v, i* and *k.*

7. The method according to the preceding claim, **characterized in that** it includes a step for storing (513) an information *Rp* indicating permanent revocation of said device if the component t is equal (511) to a predetermined value *tₚ* and if the component *v* is equal (512) to the value of the identifier *i.*

8. The method according to claim 6, **characterized in that** it includes a step to erase (515) an information *Rp* indicating a permanent revocation of the device if the component *t* is equal (511) to a predetermined value *tₐ* and if the component *v* is equal (514) to the value of the identifier *i*.

9. An electronic device (1) cooperating with a terminal (2, 2a, ..., 2P), said device including:
- means (R) for receiving an encrypted control word *c* from the terminal;
- processing means (10) for producing a control word *k'* from said encrypted control word *c*;
- means(S) for delivering said produced control word to said terminal (S) in response to the reception of the encrypted control word *c*,
**characterized in that** the device includes means (13) for storing an identifier *i* and **in that** the processing means (10) are arranged to implement a method according to claims 1 or 2 to produce the control word *k'*.

10. The electronic device according to the preceding claim, **characterized in that** it includes means (18) for implementing a delay function cooperating with the processing means and **in that** said processing means may be arranged to carry out a method according to claim 3 such that the control word *k'* can be delivered by the delivery means (S) after a predetermined length of time.

11. The electronic device according to claim 9 or 10, **characterized in that** it includes means (19) for storing an information *Rp* indicating permanent revocation of said device, and **in that** the processing means cooperate with said storage means (19) to carry out a method according to claims 7 or 8 to produce the control word *k'*.

12. The electronic device according to any one of claims 9 to 11, **characterized in that** it includes means (17) for storing or generating a word with a value *kf* different from the value of *k.*

13. A method for identifying an electronic device (1, 1a, ..., 1p) according to any one of claims 9 to 12 cooperating with a hacked terminal (2P) able to transmit a control word *k'* produced by said device over an unauthorized network (6) using a method according to any one of claims 1 to 8, said identification method being **characterized in that** it includes:
- a step for producing a control word *k* consisting of determining (101, 106, 201, 207, 208, 300, 301, 305) the value of a component *v* of said control word;
- a step for producing (102, 202, 302) an encrypted control word *c* by encrypting said control word *k* using an encryption function *E,* such that *c*=*E(k);*
- a step for broadcasting (102, 202, 302) said encrypted control wordcthrough a broadcast network (4) intended for terminals (2, 2a, 2b, 2c, 2P), including said hacked terminal (2P);
- a step for observing the hacked terminal (6) consisting of measuring (103, 203, 303) a likelihood *p(k*|*v)* of determining the actual transmission of a control word *k'* with value *k,* knowing the value of *v*;
- an identification step consisting of returning (105, 205, 307) a value directly connected to the identifier *i* of a device having produced a control word *k'* transmitted through the unauthorized network, from (104, 204, 206, 304, 306) the value of *v* and the measurement of said likelihood *p(k*|*v).*

14. A method for identifying an electronic device (1, 1a, 1b, 1c) according to any one of claims 9 to 12 cooperating with a terminal (2P) able to transmit a content *M'* previously developed by said terminal over an unauthorized network (6), by decoding an encrypted content *C* using a control word *k'* and a decoding function *dec* such that *M'*=dec(*k',C*), said control word *k'* having been produced by said device using a method according to any one of claims 1 to 8 from an encrypted control word *c* transmitted jointly with *C* using a broadcast network (4), said identification method being **characterized in that** it includes:
- a step for producing a control word *k* consisting of determining (101, 106, 201, 207, 208, 300, 301, 305) the value of a component *v* of said control word;
- a step for producing (102, 202, 302) an encrypted control word *c* by encrypting said control word *k* using an encryption function *E* such that *c=E(k);*
- a step for producing (102, 202, 302) an encrypted content *C* by encoding a content *M* using said control word *k* and an encoding function *enc* such that *C=enc(k,M);*
- a step for jointly broadcasting (102, 202, 302) said encrypted control word c and said encrypted content *C* through the broadcast network (4) to terminals (2, 2a, 2P), including said hacked terminal (2P);
- a step for observing the flow of said unauthorized network (6) consisting of measuring (103, 203, 303) a likelihood *p(M*|*v)* of determining the actual transmission of a content *M'* with value *M* knowing the value of *v*;
- an identification step consisting of returning (105, 205, 307) a value directly related to the identifier *i* of a device having produced a control word *k'* that has been used by the hacked terminal to develop a content *M'* transmitted over the unauthorized network, from (104, 204, 206, 304, 306) the value of *v* and the measurement of said likelihood *p(M*|*v).*

15. The method according to claim 13 or 14, when the method for producing a control word *k'* is according to any one of claims 1 to 4, **characterized in that** it includes one or more iterations in which:
- the step for determining the component *v* consists of:
- initializing (101) *v* at 0 beforehand;
- incrementing (106) the value of vas long as the likelihood, knowing the value of *v*, of determining the actual transmission of a control word *k'* with value *k* or of a content *M'* with value *M* is close to 1;
- the identification step consists of returning (105) the value of *v* when (104) the measurement of the likelihood, knowing the value of *v*, of seeing the actual transmission of a control word *k'* with value *k* or content *M'* with value *M* is close to 0, while the measurement of said likelihood knowing the value of *v*-1 is close to 1.

16. The method according to claim 13 or 14, when the method for producing a control word *k'* is according to any one of claims 1 to 4, **characterized in that** it includes one or more iterations for which:
- the step for determining the component *v* consists of:
- initializing (200) *a* and *b* before hand, two numbers such that *a*=1 and *b*=*n, n* being the maximum value of the component *v*;
- computing (201) the value of the component *v* such that *v=(a+b)*/*2;*
- assigning (207) the current value of *v* to *a* while (206) the likelihood, knowing the value of *v,* of determining the actual transmission of a control *word k'* with value *k* or of a content *M'* with value *M* is close to 1;
- assigning (208) the value of *v* to *b* while (206) the likelihood, knowing the value of v, of determining the actual transmission of a control word *k'* with value *k* or of a content *M'* with value *M* is not close to 1;
- the identification step consists of returning (205) the value of *v* when (204) the value *a*-1 is equal to *b*.

17. The method according to claim 13 or 14, when the method for producing a control word *k'* is according to claim 5, **characterized in that** it includes one or more iterations for which:
- the step for determining the component *v* consists of:
- initializing (300) an integer *l* beforehand such that *l*=1 and *v*, as vector of *z* integers, such that *v*=(0, ..., 0);
- incrementing *vₗ* (301) while (304) the likelihood knowing the value of *v* of respectively determining the actual transmission of a control word *k'* with value *k* or of a content *M'* with value *M*is close to 1;
- decrementing *vₗ* (305) and incrementing / while (306) the likelihood knowing the value of *v* of determining the actual transmission of a control word *k'* with value *k* or of a content *M'* with value *M* is not close to 0 and (306) the value of / is less than or equal to *z*;
- the identification step consists of returning (307) the value of *v* when (306) the value of / is greater than *z*.
